# FASCICULE DE BREVET EUROPEEN

(11) **EP 3 502 638 B1**
(45) Date de publication et mention de la délivrance du brevet: **07.09.2022**
(21) Numéro de dépôt: 18214876.7
(22) Date de dépôt: 20.12.2018
(51) Int. Cl.: G01J 5/06, G01J 5/34, G06K 9/00

(54) **CAPTEUR PYROELECTRIQUE AVEC BLINDAGE ÉLECTRO-MAGNÉTIQUE COMPRENANT UN MATÉRIAU COMPOSITE**
PYROELEKTRISCHER SENSOR MIT ELEKTROMAGNETISCHER ABSCHIRMUNG, DIE EIN VERBUNDMATERIAL UMFASST
PYROELECTRIC SENSOR WITH ELECTROMAGNETIC SHIELDING COMPRISING A COMPOSITE MATERIAL

(30) Priorité: 22.12.2017 FR 1762927
(43) Date de publication de la demande: 26.06.2019
(73) Titulaire: Commissariat à l'Energie Atomique et aux Energies Alternatives (CEA), 75015 Paris (FR)
(72) Inventeur: BENWADIH, Mohammed, 94500 CHAMPIGNY SUR MARNE (FR)
(74) Mandataire: Brevalex

(56) Documents cités:
- EP-A1- 0 798 546
- WO-A1-2016/007089
- WO-A1-2017/093179
- SADIE I. WHITE ET AL: "Electrical Percolation Behavior in Silver Nanowire-Polystyrene Composites: Simulation and Experiment", ADVANCED FUNCTIONAL MATERIALS, vol. 20, no. 16, 23 août 2010 (2010-08-23) , pages 2709-2716, XP055037748, ISSN: 1616-301X, DOI: 10.1002/adfm.201000451
- FANG FANG ET AL: "Layer-structured silver nanowire/polyaniline composite film as a high performance X-band EMI shielding material", JOURNAL OF MATERIALS CHEMISTRY C: MATERIALS FOR OPTICAL AND ELECTRONIC DEVICES, vol. 4, no. 19, 1 janvier 2016 (2016-01-01), pages 4193-4203, XP055498715, UK ISSN: 2050-7526, DOI: 10.1039/C5TC04406E

## Description

### DOMAINE TECHNIQUE

L'invention se rapporte à un capteur de motifs thermiques de type capteur pyroélectrique.

Un tel capteur forme par exemple un capteur d'empreinte papillaire, notamment un capteur d'empreinte digitale.

### ÉTAT DE LA TECHNIQUE ANTÉRIEURE

Un capteur pyroélectrique exploite les propriétés de pyroélectricité d'un matériau, c'est-à-dire sa capacité à générer des charges électriques en réponse à une variation de température.

Un tel capteur comporte une matrice de capacités pyroélectriques, formant chacune un transducteur pour traduire une variation temporelle de température en un signal électrique.

Chaque capacité pyroélectrique comporte une portion en matériau pyroélectrique, disposée entre une électrode inférieure et une électrode supérieure. L'une des électrodes est mise à un potentiel constant, et forme une électrode de référence. L'autre électrode, nommée électrode de collecte de charges, collecte des charges pyroélectriques générées par le matériau pyroélectrique en réponse à une variation de température. L'électrode de collecte de charges est connectée à un circuit de lecture, pour mesurer la quantité de charges collectée.

En fonctionnement, un objet est appuyé contre une surface de contact du capteur.

La détection peut exploiter simplement une différence de température entre cet objet et ladite surface de contact. Le capteur réalise alors une détection de type passif.

Dans le cas d'une détection d'empreinte digitale, le doigt est appuyé contre la surface de contact du capteur.

Au niveau des crêtes de l'empreinte, le doigt est en contact physique direct avec le capteur. Un transfert thermique entre la peau et la surface de contact du capteur s'effectue par conduction, ce qui conduit à une première variation temporelle de température.

Au niveau des vallées de l'empreinte, le doigt n'est pas en contact physique direct avec le capteur. Un transfert thermique entre la peau et la surface de contact du capteur s'effectue à travers l'air. L'air présente des propriétés d'isolant thermique, ce qui conduit à une seconde variation temporelle de température, moins importante.

La différence entre ces deux variations temporelles de température se traduit par une différence entre les signaux mesurés par les capacités pyroélectriques, selon qu'elles se trouvent sous une vallée ou sous une crête de l'empreinte. L'image de l'empreinte présente alors un contraste qui dépend de cette différence.

Après quelques secondes, la température du doigt et la température de la surface de contact s'homogénéisent, et il n'est plus possible d'obtenir un contraste satisfaisant.

Pour pallier à cet inconvénient, on ajoute des moyens de chauffage sous la surface de contact, pour dissiper une certaine quantité de chaleur dans chaque pixel du capteur. La variation de température mesurée dans chaque pixel du capteur se rapporte alors à la mesure dans laquelle cette quantité de chaleur est évacuée du pixel. Cela permet d'améliorer et de conserver au cours du temps, le contraste d'une image acquise à l'aide dudit capteur. Le capteur réalise alors une détection de type actif. Un tel capteur est décrit par exemple dans la demande de brevet EP 2 385 486.

Dans le cas d'une détection d'empreinte digitale, la variation de température est importante au niveau des vallées de l'empreinte, où la chaleur n'est transférée au doigt qu'à travers l'air, et plus faible au niveau des crêtes de l'empreinte, où la chaleur est transférée efficacement au doigt, par conduction.

Quel que soit le type de détection mis en œuvre, un capteur pyroélectrique comporte avantageusement un étage dit de blindage électromagnétique, c'est-à-dire un étage électriquement conducteur, apte à être connecté à une source de potentiel constant, et formant un blindage électromagnétique entre un objet à imager appliqué contre la surface de contact du capteur, et les portions en matériau pyroélectrique des pixels du capteur. L'étage de blindage électromagnétique offre une protection à l'égard des parasites électrostatiques, notamment autour de 50 Hz, évitant la récupération de bruit électromagnétique dans les mesures réalisées. Il permet également de protéger le capteur à l'égard des décharges électrostatiques, apportées par le contact de l'objet à imager contre la surface de contact du capteur. Dans le cas d'un capteur d'empreinte papillaire, il offre une protection à l'égard des décharges électrostatiques, apportées par le contact avec la peau lorsque le doigt touche la surface de contact du capteur.

La demande de brevet français n° 16 57391, déposée le 29 juillet 2016, décrit un exemple d'un capteur pyroélectrique apte à réaliser une détection de type actif, et comportant un tel étage de blindage électromagnétique. L'étage de blindage électromagnétique y est constitué d'une simple couche en matériau électriquement conducteur.

L'étage de blindage électromagnétique s'étend entre la surface de contact du capteur, et les portions en matériau pyroélectrique des pixels du capteur, de préférence sous une couche de protection du capteur.

Afin de ne pas entraver les échanges de chaleur entre un objet à imager, appuyé contre ladite surface de contact, et les portions en matériau pyroélectrique, l'étage de blindage électromagnétique doit pouvoir transmettre la chaleur.

Cependant, si cet étage est constitué d'une couche d'un matériau présentant une trop forte conductivité thermique, on risque que la chaleur se propage latéralement dans l'étage de blindage électromagnétique, d'un pixel à l'autre du capteur. Ce phénomène, nommé diathermie, empêche qu'un motif thermique sur la surface de contact soit reproduit fidèlement au niveau des portions en matériau pyroélectrique.

A l'inverse, si cet étage est constitué d'une couche d'un matériau présentant une trop faible conductivité thermique, les échanges de chaleur à travers cet étage sont ralentis, ralentissant également la lecture des pixels du capteur. Cette lecture plus lente peut poser des difficultés, en particulier pour des capteurs de grandes dimensions.

Un objectif de la présente invention est de proposer une solution pour que l'étage de blindage électromagnétique d'un capteur pyroélectrique offre une grande vitesse de transfert de la chaleur, tout en limitant les transferts de chaleur d'un pixel à l'autre du capteur.

### EXPOSÉ DE L'INVENTION

Cet objectif est atteint avec un capteur de motifs thermiques comportant une matrice de pixels, chaque pixel comportant au moins une capacité pyroélectrique, formée par une portion en matériau pyroélectrique disposée entre une électrode dite de collecte de charges et une électrode dite de référence, et la matrice de pixels comportant, superposées au-dessus d'un substrat :
- un étage d'électrodes de collecte de charges, comportant les électrodes de collecte de charge de chacun des pixels ; et
- un étage comprenant un matériau pyroélectrique, comportant les portions en matériau pyroélectrique de chacun des pixels.

La matrice de pixels comporte en outre un étage dit de blindage électromagnétique, électriquement conducteur, située entre l'étage comprenant un matériau pyroélectrique et une surface de contact pour y appliquer un objet à imager.

Selon l'invention, l'étage de blindage électromagnétique comprend une couche de blindage qui comporte des nanofils et/ou nanotubes baignant dans un milieu nommé milieu environnant.

Lesdits nanofils et/ou nanotubes sont constitués chacun d'un matériau présentant une conductivité thermique supérieure à celle dudit milieu environnant.

En outre, un rapport entre un pas de répartition des pixels de la matrice de pixels et une épaisseur de la couche de blindage est supérieur ou égal à 20.

Le matériau des nanofils et/ou nanotubes forme un bon conducteur thermique, en comparaison avec ledit milieu environnant. De préférence, ce matériau présente une conductivité thermique supérieure d'un facteur au moins 10, et même au moins 20, à la conductivité thermique dudit milieu environnant.

Le matériau des nanofils et/ou nanotubes est par exemple du métal ou du carbone.

En pratique, le matériau des nanofils et/ou nanotubes est en outre un matériau électriquement conducteur.

Les nanofils et/ou nanotubes offrent ainsi des transferts thermiques rapides à travers la couche de blindage, la chaleur se propageant rapidement dans la couche de blindage en passant par lesdits nanofils et/ou nanotubes.

En outre, les nanofils et/ou nanotubes ont en commun de présenter chacun une structure allongée et de diamètre réduit. Cette structure permet de limiter des transferts de chaleurs d'un pixel à l'autre de la matrice de pixels, lorsque la chaleur traverse la couche de blindage en passant par les nanofils et/ou nanotubes.

En outre, l'épaisseur de la couche de blindage, définie selon un axe orthogonal à une face supérieure ou inférieure du substrat, est bien inférieure à un pas de répartition des pixels de la matrice de pixels.

Cette épaisseur est par exemple inférieure ou égale à 1,5 µm, de préférence inférieure ou égale à 1,0 µm. Cette épaisseur vaut par exemple 600 nm.

Le pas de pixel est quant à lui supérieur ou égal à 20 µm, et de préférence supérieur ou égal à 50 µm.

Ainsi, un rapport entre le pas de pixel et l'épaisseur de la couche de blindage est avantageusement supérieur ou égal à 20, et même supérieur ou égal à 50.

Par conséquent, un nanofil ou nanotube, même s'il n'est que légèrement incliné relativement au plan du substrat, traverse la couche de blindage sur une grande partie de son épaisseur, sans pour autant s'étendre sur de très nombreux pixels de la matrice de pixels. Le rapport élevé entre le pas de pixel et l'épaisseur de la couche de blindage permet ainsi de limiter des transferts de chaleur d'un pixel à l'autre de la matrice de pixels, tout en offrant de bons transferts de chaleur dans la couche de blindage, dans le sens de son épaisseur.

La couche en matériau de blindage, et donc l'étage de blindage électromagnétique selon l'invention, offrent ainsi à la fois :
- des transferts thermiques rapides, selon un axe (Oz) orthogonal au plan du substrat; et
- une faible diffusion latérale de la chaleur, d'un pixel à l'autre du capteur.

On remarque que, lorsqu'un nanofil ou nanotube dépasse légèrement sur un pixel voisin, cela n'induit pas d'erreur importante en détection puisque la majorité de la chaleur s'étend néanmoins dans le bon pixel. Par exemple, si un nanofil ou nanotube s'étend sur 80% de sa longueur sur un pixel initial P1, et sur 20% de sa longueur sur un pixel voisin P2, l'erreur en détection ne sera que de 20%.

On remarque également qu'en fonction des dimensions caractéristiques du motif thermique à imager, relativement à la taille de pixel, on peut tolérer des dépassements plus ou moins importants sur des pixels voisins. Dit autrement, si les dimensions caractéristiques du motif thermique à imager sont de l'ordre de plusieurs pixels, un nanofil ou nanotube peut dépasser sur des pixels voisins sans que cela se traduise par une erreur de détection critique. En particulier, un taux de dépassement sur le pixel voisin est à diviser par la dimension caractéristique du motif thermique, en pixels, pour obtenir le taux d'erreur en détection. Ainsi, il n'est pas obligatoire que les nanofils ou nanotubes présentent chacun une longueur inférieure ou égale à la largeur d'un pixel.

En pratique, la largeur d'une vallée ou d'une crête d'une empreinte digitale correspond à environ 10 pixels du capteur. Ainsi, si un nanofil ou nanotube s'étend sur 80% de sa longueur sur un pixel initial P1, et sur 20% de sa longueur sur un pixel voisin P2, l'erreur en détection ne sera que de 2% (20%/10).

Le cas échéant, l'étage de blindage électromagnétique selon l'invention peut former en outre les électrodes de référence des pixels de la matrice de pixels. En variante, les électrodes de référence s'étendent dans un étage du capteur distinct de l'étage de blindage électromagnétique.

De préférence, le matériau des nanofils et/ou nanotubes présente une conductivité thermique au moins dix fois supérieure à celle dudit milieu environnant.

La couche de blindage est avantageusement constituée d'un matériau composite, le matériau composite comportant lesdits nanofils et/ou nanotubes intégrés dans un agglomérant qui forme ledit milieu environnant.

De préférence, le matériau composite comporte entre 20% et 40% en poids de nanofils et/ou nanotubes.

L'agglomérant peut être une matrice polymère électriquement isolante, les nanofils et/ou nanotubes formant ensemble un réseau percolé.

En variante, l'agglomérant peut être une matrice polymère électriquement conductrice, les nanofils et/ou nanotubes formant ensemble un réseau non percolé.

Les nanofils et/ou nanotubes présentent avantageusement chacun une longueur strictement inférieure au pas de pixels de la matrice de pixels.

Le matériau composite peut comporter en outre des particules de graphène.

En particulier, le matériau composite peut comporter en outre entre 10% et 30% en poids de particules de graphène.

En tout état de cause, le matériau composite comporte de préférence entre 30% et 40% en poids d'agglomérant, lorsque l'agglomérant est électriquement isolant. Le matériau composite comporte de préférence entre 45% et 55% en poids d'agglomérant, lorsque l'agglomérant est électriquement conducteur.

De préférence, le matériau composite comporte entre 20% et 40% en poids de nanofils et/ou nanotubes.

L'étage de blindage électromagnétique peut comprendre en outre des plots comportant du graphène ou du métal. De préférence, la hauteur des plots est supérieure ou égale à la moitié de la hauteur de la couche de blindage.

Selon un mode de réalisation avantageux :
- chaque pixel comporte en outre un élément de chauffage, apte à chauffer par effet Joule la portion en matériau pyroélectrique dudit pixel ; et
- un étage de chauffage, comportant les éléments de chauffage de chacun des pixels, s'étend dans la matrice de pixels entre l'étage comprenant un matériau pyroélectrique et la surface de contact.

De préférence, selon ce mode de réalisation avantageux :
- les éléments de chauffage d'une même ligne de pixels sont formés ensemble d'un seul tenant, en une même bande de chauffage ;
- les électrodes de collecte de charges d'une même colonne de pixels sont formées ensemble d'un seul tenant, en une même macro-électrode de collecte de charges ; et
- l'étage de blindage électromagnétique comprend en outre une matrice de plots comportant du graphène ou du métal, chaque plot s'étendant à travers une région d'intersection entre une projection d'une bande de chauffage et une projection d'une macro-électrode de collecte de charges, lesdites projections étant des projections orthogonales dans un plan parallèle à une face supérieure ou inférieure du substrat.

La matrice de pixels peut comporter, superposés :
- l'étage d'électrodes de collecte de charges ;
- l'étage comprenant un matériau pyroélectrique ;
- l'étage de blindage électromagnétique, formant en outre les électrodes de référence des pixels de la matrice de pixels ;
- une couche d'isolation électrique ; et
- l'étage de chauffage.

En variante, la matrice de pixels peut comporter, superposés :
- l'étage d'électrodes de collecte de charges ;
- l'étage comprenant un matériau pyroélectrique ;
- l'étage de chauffage, les éléments de chauffage formant en outre les électrodes de référence des pixels de la matrice de pixels ;
- une couche d'isolation électrique ; et
- l'étage de blindage électromagnétique.

L'invention concerne également un procédé de fabrication de la matrice de pixels d'un capteur de motifs thermiques selon l'invention, dans lequel une étape de réalisation de l'étage de blindage électromagnétique comporte un dépôt d'une encre comprenant, en suspension dans un solvant, lesdits nanofils et/ou nanotubes.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- les figures 1A et 1B illustrent de manière schématique un premier mode de réalisation d'un capteur de motifs thermiques selon l'invention ;
- la figure 1C illustre une variante du mode de réalisation des figures 1A et 1B ;
- les figures 2A et 2B illustrent de manière schématique un deuxième mode de réalisation d'un capteur de motifs thermiques selon l'invention ;
- la figure 2C illustre une variante du mode de réalisation des figures 2A et 2B ;
- les figures 3A et 3B illustrent de manière schématique un troisième mode de réalisation d'un capteur de motifs thermiques selon l'invention ; et
- la figure 3C illustre une variante du mode de réalisation des figures 3A et 3B.

### EXPOSÉ DÉTAILLÉ DE MODES DE RÉALISATION PARTICULIERS

Pour plus de clarté, on a représenté sur les figures les axes (Ox), (Oy) et/ou (Oz) d'un repère orthonormé. Les échelles ne sont pas respectées sur les figures, en particulier, les épaisseurs de chacun(e) des couches et/ou étages.

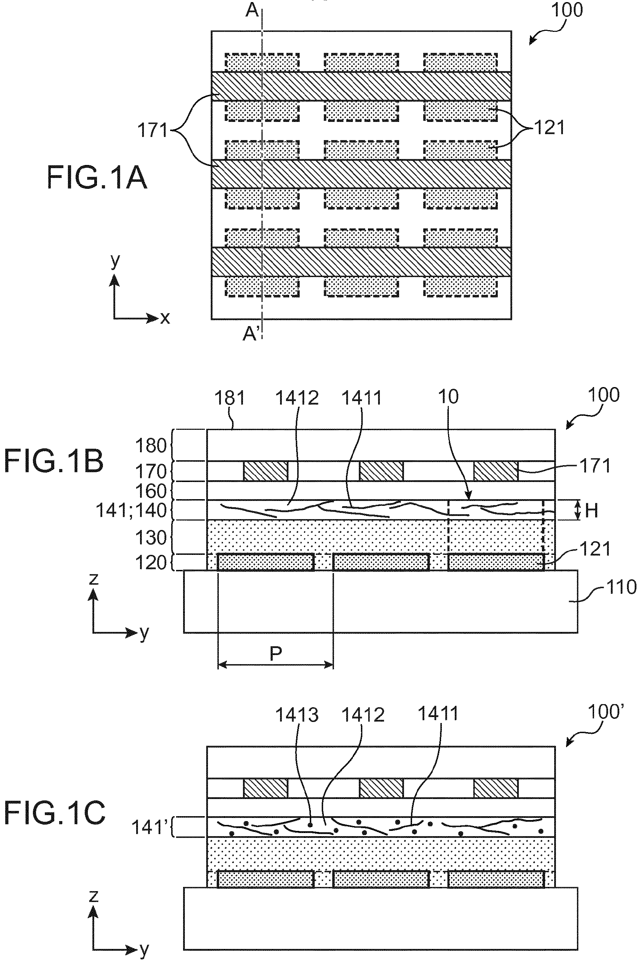

Les figures 1A et 1B illustrent de manière schématique un premier mode de réalisation d'un capteur de motifs thermiques 100 selon l'invention. La figure 1A est une vue schématique de dessus, dans un plan parallèle au plan (xOy). La figure 1B est une vue en coupe dans un plan AA' parallèle au plan (yOz).

Le capteur de motifs thermiques 100 comporte, superposés au-dessus d'un substrat 110, selon l'axe (Oz) orthogonal à une face supérieure ou inférieure dudit substrat :
- un étage 120 nommé étage d'électrodes de collecte de charges ;
- un étage 130 comprenant un matériau pyroélectrique ;
- un étage 140 de blindage électromagnétique ;
- une couche d'isolation électrique 160 ;
- un étage de chauffage 170 ; et
- une couche de protection 180 (optionnelle).

Cet empilement forme une matrice de pixels, dans laquelle chaque pixel comporte au moins une capacité pyroélectrique, formée par une portion en matériau pyroélectrique disposée entre une électrode de collecte de charge, et une électrode de référence. Dans ce mode de réalisation, l'étage 140 de blindage électromagnétique forme également une électrode de référence commune à tous les pixels de la matrice de pixels.

Le substrat 110 est par exemple en verre, en silicium, en un pastique tel que le poly(téréphtalate d'éthylène) (PET), en poly(naphtalate d'éthylène) (PEN), en polyimide (film Kapton), etc. Il s'agit de préférence d'un substrat souple, par exemple un substrat en polyimide de 5 µm à 10 µm d'épaisseur, ou en un plastique tel que le PET.

Il présente une face supérieure et une face inférieure parallèles entre elles, et parallèles au plan (xOy). Dans la suite, le plan du substrat désigne un plan parallèle à ces faces inférieure et supérieure.

L'étage d'électrodes de collecte de charges 120 comporte ici une matrice d'électrodes de collecte de charges 121, disposées en lignes et en colonnes selon les axes (Ox) et (Oy).

Les électrodes de collecte de charges sont constituées d'un métal tel que l'or ou l'argent, ou tout autre matériau électriquement conducteur.

Elles sont réparties selon les axes (Ox) et (Oy), selon un pas de répartition inférieur ou égal à 150 µm. Le pas de répartition est par exemple de 80 µm environ (soit une résolution de 320 dpi), ou 90 µm. En variante, le pas de répartition peut être de 50,8 µm (soit une résolution de 500 dpi).

Chacune des électrodes de collecte de charges 121 délimite ici, latéralement, la capacité pyroélectrique 10 de l'un des pixels de la matrice de pixels (voir figure 1B).

L'étage 130 comprenant un matériau pyroélectrique est constitué ici d'une pleine couche comprenant du poly(fluorure de vinylidène) (PVDF) ou l'un de ses dérivés (notamment le copolymère PVDF-TrFE, TrFE pour Tri-fluoro-éthylène).

En variante, la couche 130 comprend du nitrure d'aluminium (AIN), du titanate de baryum (BaTiO₃), du Titano-Zirconate de Plomb (PZT), ou tout autre matériau pyroélectrique.

La couche 130 s'étend d'un seul tenant, et sans ouverture, en recouvrant l'ensemble des électrodes de collecte de charges 121 de l'étage 120.

Chaque portion de la couche 130, située au regard d'une électrode de collecte de charges 121, forme la portion en matériau pyroélectrique d'un pixel de la matrice de pixels.

L'étage 140 de blindage électromagnétique forme un étage électriquement conducteur, comportant une couche de blindage en un matériau composite décrit ci-après.

Il est apte à être connecté à une source de potentiel constant, par exemple à la masse.

L'étage 140 s'étend de préférence d'un seul tenant, et sans ouverture, au-dessus de l'ensemble des électrodes de collecte de charges 121 de l'étage 120, c'est-à-dire en passant par tous les pixels de la matrice de pixels.

Ici, l'étage 140 forme également une électrode de référence, commune à tous les pixels de la matrice de pixels. En d'autres termes, chaque portion de l'étage 140, située au regard d'une électrode de collecte de charges 121, forme l'électrode de référence d'un pixel de la matrice de pixels.

La couche d'isolation électrique 160 est constituée d'un matériau diélectrique, par exemple du polyimide. Elle présente de préférence une épaisseur inférieure à 5 µm, par exemple égale à 1 µm.

Selon le mode de réalisation des figures 1A et 1B, chaque pixel de la matrice de pixels comporte en outre un élément de chauffage, les éléments de chauffage s'étendant ici dans l'étage de chauffage 170.

Ici, les éléments de chauffage d'une même ligne de pixels sont reliés électriquement entre eux pour former une bande de chauffage 171. Les bandes de chauffage 171 sont aptes à recevoir un courant de chauffage, pour fournir un chauffage par effet Joule, de manière à réaliser une détection de type actif. Elles sont constituées de préférence d'un métal, par exemple de l'or ou de l'argent.

La couche de protection 180 forme la couche la plus externe du capteur. Elle permet de limiter l'usure liée à des contacts répétés avec un objet à imager, notamment avec la peau. La couche de protection 180 est par exemple une couche en DLC (Diamond Like Carbon), en résine, en polyimide, etc. Elle présente généralement une épaisseur comprise entre quelques micromètres et 25 µm.

Une surface supérieure 181 de la couche de protection 180, du côté opposé au substrat 110, forme une surface de contact du capteur de motifs thermique 100. En fonctionnement, un objet à imager tel qu'une empreinte papillaire est appliqué contre ladite surface de contact 181, de manière à réaliser des échanges thermiques avec l'étage comprenant un matériau pyroélectrique.

Selon l'invention, l'étage 140 de blindage électromagnétique comprend une couche de blindage 141, en matériau composite, recouvrant l'ensemble des électrodes de collecte de charges 121 de l'étage 120.

Un matériau composite est composé d'au moins deux constituants, assemblés ensemble en une structure hétérogène. Ces constituants restent distincts et séparés dans le matériau composite. Ils présentent chacun des propriétés physiques ou chimiques différentes. Le matériau composite présente quant à lui des propriétés que chacun des constituants, pris seul, ne présente pas. On peut considérer qu'il combine, ou moyenne, des propriétés physiques ou chimiques de ses différents constituants.

Le matériau composite est constitué ici par :
- des structures allongées électriquement conductrices, ici des nanofils métalliques 1411 ; et
- un agglomérant 1412, nommé également liant, ou matrice, dans lequel sont noyés les nanofils métalliques 1411.

Ici, l'étage 140 de blindage électromagnétique est entièrement constitué de ladite couche de blindage 141.

L'agglomérant 1412 forme un milieu environnant, dans lequel s'étendent les nanofils métalliques 1411.

L'agglomérant 1412 est constitué généralement d'un matériau polymère nommé matrice polymère. Il assure la cohésion des nanofils métalliques 1411, et leur maintien en position dans la couche de blindage, fixes les uns relativement aux autres. Il forme un milieu environnant

Les nanofils métalliques 1411 sont physiquement isolés les uns des autres par des portions de l'agglomérant 1412, excepté, le cas échéant, au niveau d'un ou plusieurs point(s) de contact entre deux nanofils voisins. La densité desdits points de contact augmente avec la densité de nanofils métalliques 1411 dans le matériau composite.

L'agencement des nanofils représenté sur les figures est purement illustratif, et ne limite en rien le champ de l'invention.

Selon l'invention :
- l'agglomérant 1412 forme un mauvais conducteur thermique ; et
- les nanofils métalliques 1411 sont constitués d'un matériau formant un bon conducteur thermique.

Ainsi, la chaleur circule rapidement dans la couche de blindage, principalement en passant par les nanofils métalliques 1411.

En outre, les nanofils métalliques 1411 sont globalement thermiquement isolés les uns des autres, par des portions de l'agglomérant 1412. L'isolation thermique entre les nanofils métalliques 1411 diminue, lorsque la densité de nanofils dans le matériau composite augmente.

L'épaisseur H de la couche de blindage 141 en matériau composite est définie selon l'axe (Oz), orthogonal au plan du substrat.

Le pas P de pixel est défini dans un plan parallèle au plan du substrat.

De préférence, les pixels de la matrice de pixels sont répartis selon une matrice à maille carrée, présentant un même pas P selon les axes (Ox) et (Oy). Si les pixels sont répartis selon un maillage défini par plusieurs pas, par exemple un maillage rectangulaire défini par un pas selon (Ox) et un pas selon (Oy), on considère le plus petit de ces pas.

Le pas P de pixel est au moins 20 fois supérieur à l'épaisseur H, et même au moins 50 fois supérieur à l'épaisseur H.

De préférence, l'épaisseur H est inférieure à 1 µm, par exemple égale à 0,6 µm ou 0,5 µm.

Le pas P de pixel correspond au pas de répartition des électrodes de collecte de charge, par exemple 50,8 µm ou 80 µm, ou préférentiellement 90 µm.

La chaleur circule dans la couche de blindage 141 en matériau composite, principalement en passant par les nanofils métalliques 1411.

Grâce notamment au rapport élevé entre le pas de pixel P, selon (Ox), respectivement (Oy), et l'épaisseur H de la couche de blindage 141, selon (Oz), on peut obtenir à la fois :
- des transferts thermiques rapides à travers la couche de blindage 141, selon l'axe (Oz) ; et
- des transferts thermiques limités d'un pixel à l'autre de la matrice de pixels, au niveau de la couche de blindage 141.

Les nanofils métalliques 1411 sont constitués d'un matériau présentant une conductivité thermique supérieure ou égale à 100 W.m⁻¹K⁻¹.

Les nanofils métalliques 1411 comprennent par exemple un métal tel que l'argent, l'or, le cuivre, l'aluminium, etc. Ils sont par exemple en argent, avec une conductivité thermique comprise entre 400 et 429 W.m⁻¹K⁻¹ (selon un taux d'impuretés du métal argent).

L'agglomérant 1412 est constitué de préférence d'un matériau présentant une conductivité thermique inférieure ou égale à 10 W.m⁻¹K⁻¹.

De manière encore plus préférée, il est constitué d'un matériau présentant une conductivité thermique inférieure ou égale à 1 W.m⁻¹K⁻¹.

Il est par exemple en PEDOT :PSS (mélange de poly(3,4-éthylènedioxythiophène) (PEDOT) et le poly(styrène sulfonate) de sodium (PSS)), présentant une conductivité thermique de 0,3 W.m⁻¹K⁻¹.

En tout état de cause, la conductivité thermique du matériau formant les nanofils métalliques 1411 est de préférence au moins dix fois supérieure à celle de l'agglomérant 1412.

La couche de blindage 141 forme une couche électriquement conductrice. En particulier, elle doit pouvoir être alimentée en tension, ce qui ne nécessite pas pour autant la conduction d'un courant dans toute ladite couche.

Plusieurs solutions permettent d'obtenir cette propriété de conduction électrique.

Une première solution consiste à utiliser un agglomérant 1412 électriquement isolant, combiné à une grande densité de nanofils métalliques 1411.

Les nanofils 1412, puisqu'ils sont constitués de métal, sont électriquement conducteurs. En d'autres termes, ils sont constitués d'un matériau présentant une faible résistivité électrique, par exemple environ 16.10⁻⁹ Ω.m pour l'argent, ou 23.10⁻⁹ Ω.m pour l'or.

Puisque l'agglomérant est électriquement isolant, la conduction électrique est assurée par les nanofils métalliques 1412, qui forment alors ensemble un réseau dit percolé. En d'autres termes, on peut relier ensemble des couples de deux points appartenant à deux bords opposés de la couche de blindage, par une suite continue de nanofils, chacun en contact physique direct avec le suivant.

L'agglomérant 1412 électriquement isolant est par exemple une matrice polymère en polyvinylpyrrolidone (PVP), ou en poly(méthacrylate de méthyle) (PMMA), ou en polystyrène (PS), ou en CYTOP^{™} (polymère fluoré amorphe).

Cette première solution donne accès à une large gamme de matériaux pour former l'agglomérant, et à une large gamme d'encres pour réaliser la couche de blindage en matériau composite (voir ci-après).

Selon une deuxième solution, l'agglomérant 1412 est électriquement conducteur.

L'agglomérant peut être en PEDOT :PSS, ou en PEDOT, de résistivité électrique égale à 50000.10⁻⁹ Ω.m.

Le PEDOT et le PEDOT :PSS ont pour avantage qu'ils peuvent être déposés sans nécessité d'une atmosphère contrôlée. Pour autant, d'autres matériaux ne sont pas exclus, tels que le poly(p-phénylène sulfide), le polypyrrole (PPY), le polythiophène (PT), le polyacétylène (PAC), la polyaniline (PAni), la mélanine, des diélectriques organiques, etc.

La résistivité électrique du matériau formant l'agglomérant 1412 peut être bien supérieure à celle d'un métal, par exemple supérieure ou égale à 10000.10⁻⁹ Ω.m, puisque la couche de blindage en matériau composite est destinée à supporter de faibles courants seulement.

Dans cette deuxième solution, les nanofils métalliques 1412 peuvent former ensemble un réseau non percolé.

Cette deuxième solution permet d'utiliser un matériau composite ayant une faible densité de nanofils métalliques, ce qui limite les transferts de chaleur d'un pixel à l'autre de la matrice de pixels, par l'intermédiaire d'un ou plusieurs nanofil(s).

Les nanofils métalliques 1411 présentent de préférence chacun un diamètre compris entre 10 nm et 300 nm, plus particulièrement entre 10 nm et 100 nm. De tels diamètres évitent de perturber des couches déposées au-dessus de la couche de blindage, du côté opposé au substrat.

De préférence, les nanofils métalliques 1411 présentent chacun une longueur strictement inférieure au pas de pixel de la matrice de pixels. Cette longueur est comprise généralement entre 5 µm et 100 µm, en fonction de la taille du pas de pixel.

En tout état de cause, la densité de nanofils métalliques 1411 est comprise de préférence entre 20% et 40% en poids du matériau composite. Une telle proportion permet de limiter la diffusion latérale de la chaleur, par l'intermédiaire des nanofils métalliques.

Avec un agglomérant 1412 électriquement conducteur, le matériau composite 141 comporte de préférence entre 20% et 30% en poids de nanofils métalliques 1411.

Avec un agglomérant 1412 électriquement isolant, le matériau composite 141 comporte de préférence entre 30% et 40% en poids de nanofils métalliques 1411, par exemple 35% en poids.

De préférence, la couche de blindage 141, en matériau composite, compte entre 200 et 300 nanofils/mm², par exemple entre 220 et 260 nanofils/mm².

En pratique, deux nanofils au maximum s'étendent dans la couche de blindage 141, dans le sens de l'épaisseur.

Le premier mode de réalisation tel que décrit ci-dessus présente en outre l'avantage de ne pas requérir d'alignement particulier de l'étage de blindage électromagnétique, relativement aux pixels de la matrice de pixels.

La figure 1C illustre, selon une vue en coupe dans un plan parallèle au plan (yOz), une variante 100' du mode de réalisation des figures 1A et 1B.

Cette variante ne diffère de celle des figures 1A et 1B qu'en ce que le matériau composite de la couche de blindage 141' comporte en outre des particules de graphène 1413, réparties avec les nanofils métalliques 1411 dans l'agglomérant 1412.

Le graphène est un matériau bidimensionnel dont l'empilement constitue le graphite, le graphite étant une forme cristallisée du carbone. Le graphène est thermiquement et électriquement conducteur.

Les particules de graphène désignent des amas planaires en graphène, répartis ici dans la couche de blindage, et orientés selon des plans parallèles au plan du substrat.

Les particules de graphène présentent une géométrie planaire. Elles présentent une section de largeur comprise entre 1 µm et 10 µm, et une épaisseur comprise entre quelques nanomètres et 100 nm.

De préférence, les particules de graphène sont réalisées à l'aide d'une encre imprimable à base de graphène, par exemple l'encre Vor-ink ^{™}. Les particules de graphène, réparties dans le matériau composite, permettent de diriger localement la température selon l'axe (Oz). Le transfert thermique est d'autant plus efficace que la section des particules de graphène est importante.

Les particules de graphène, de grande section et d'épaisseur réduite, sont donc complémentaires des nanofils métallique, de faible section et de grande longueur.

Les particules de graphène présentent en outre l'avantage de faire une bonne interface avec la couche 130 comprenant un matériau pyroélectrique.

Elles peuvent en outre établir des contacts électriques et thermiques entre des nanofils voisins.

Le matériau composite comporte par exemple entre 10% et 30% en poids de particules de graphène.

Selon que l'agglomérant 1412 est électriquement conducteur ou non, et selon la densité de nanofils métalliques, la quantité préférée de particules de graphène varie.

Avec un agglomérant 1412 électriquement conducteur, le matériau composite comporte par exemple entre 10% et 20% en poids de particules de graphène. Il comporte par exemple 35% en poids de nanofils métalliques, 50% en poids d'agglomérant, et 15% en poids de particules de graphène, ou même 25% en poids de nanofils métalliques, 50% en poids d'agglomérant, et 15% en poids de particules de graphène.

Avec un agglomérant 1412 électriquement isolant, le matériau composite comporte par exemple entre 20% et 30% en poids de particules de graphène. Il comporte par exemple 35% en poids de nanofils métalliques, 40% en poids d'agglomérant, et 25% en poids de particules de graphène, ou même 25% en poids de nanofils métalliques, 40% en poids d'agglomérant, et 25% en poids de particules de graphène.

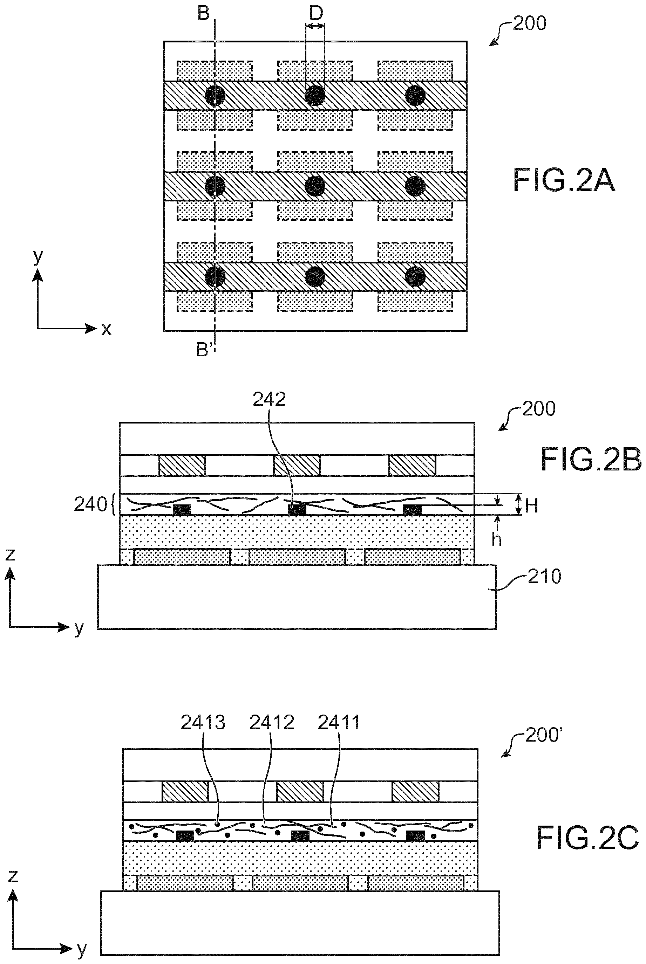

Les figures 2A et 2B illustrent de manière schématique un deuxième mode de réalisation d'un capteur de motifs thermiques 200 selon l'invention. La figure 2A est une vue schématique de dessus (en transparence), dans un plan parallèle au plan (xOy). La figure 2B est une vue en coupe dans un plan BB' parallèle au plan (yOz).

Ce deuxième mode de réalisation ne diffère du mode de réalisation des figures 1A et 1B qu'en ce que l'étage de blindage électromagnétique 240 comporte en outre des plots 242, chaque plot étant ici constitué d'un matériau thermiquement conducteur tel que du graphène ou un métal.

Les plots 242 s'entendent entièrement dans la couche de blindage en matériau composite.

De préférence, ils s'enfoncent dans la couche de blindage en matériau composite, depuis sa face inférieure, située du côté du substrat 210. Le matériau composite s'étend alors entre les plots, et au-dessus des plots du côté opposé au substrat 210. On peut alors identifier, dans l'étage de blindage électromagnétique 240 :
- une sous-couche inférieure, située du côté du substrat 210, et recevant les plots 242 entourés de matériau composite ; et
- une sous-couche supérieure, située au-dessus de la sous-couche inférieure, et entièrement constituée du matériau composite.

Ici, l'étage de blindage électromagnétique 240 est constitué de la couche de blindage en matériau composite et desdits plots 242.

Ici, les plots 242 sont répartis régulièrement, en lignes et en colonnes, de sorte que chaque pixel de la matrice de pixel comporte un seul et unique plot 242. En d'autres termes, chaque pixel de la matrice de pixels comporte une portion de l'étage de blindage électromagnétique 240, et ladite portion reçoit un unique plot 242.

De préférence, le centre géométrique d'un plot 242 et le centre géométrique du pixel associé définissent ensemble un axe parallèle à l'axe (Oz).

Les plots 242 présentent par exemple une forme de cylindre de révolution, présentant :
- un diamètre D (dimension dans un plan parallèle au plan du substrat 210) ; et
- une hauteur h (dimension selon l'axe (Oz), orthogonal au plan du substrat 210).

Ici, chaque plot 242 s'enfonce, selon l'axe (Oz) orthogonal au plan du substrat, sur moins de la moitié de l'épaisseur H de la couche de blindage en matériau composite.

Le diamètre D est inférieur au pas de pixel de la matrice de pixels, par exemple deux fois inférieur au pas de la matrice de pixels. Ce diamètre D est compris par exemple 10 µm et 100 µm, de préférence entre 50 µm et 60 µm. (Les plots 242 sont sous-dimensionnés sur les figures 2A et 2B.)

En tout état de cause, les plots 242 sont physiquement isolés les uns des autres, sans contact physique direct entre eux.

Les plots 242 coopèrent avec les nanofils métalliques du matériau composite, pour favoriser des transferts thermiques selon l'axe (Oz), dans l'étage 240 de blindage électromagnétique, et limiter des transferts thermiques transverses dans ledit étage 240, dans des plans (xOy).

De préférence, les plots sont réalisés à l'aide d'une encre imprimable, par exemple une encre à base de graphène, pour des plots en graphène, ou une encre métallique, pour des plots comprenant un métal.

Les conditions énoncées ci-dessus, relatives à l'épaisseur *H* de la couche de blindage en matériau composite s'appliquent également dans ce deuxième mode de réalisation, dans lequel des plots sont intégrés dans ladite couche de blindage.

L'invention n'est pas limitée à des plots 242 en forme de cylindre de révolution.

Ils peuvent présenter une forme comportant un corps central cylindrique encadré verticalement entre un chapeau et un pied concaves. Le diamètre d'un plot correspond alors au diamètre de son corps central cylindrique.

Selon d'autres variantes, non représentées, les plots présentent des sections non circulaires dans des plans parallèles au plan du substrat, par exemple des sections carrés ou rectangulaires, de côté compris par exemple entre 10 µm et 40 µm.

Le cas échéant, on peut définir le diamètre d'un plot comme étant la plus grande longueur mesurée selon un axe rectiligne, sur ce plot, dans un plan parallèle au plan du substrat.

Les plots se distinguent d'éventuelles particules de graphène du matériau composite, notamment par leurs dimensions : leur diamètre est supérieur à 10 µm.

La figure 2C illustre, selon une vue en coupe dans un plan parallèle au plan (yOz), une variante 200' du mode de réalisation des figures 2A et 2B.

Cette variante ne diffère de celle des figures 2A et 2B qu'en ce que le matériau composite comporte en outre des particules de graphène 2413, réparties avec les nanofils métalliques 2411 dans l'agglomérant 2412.

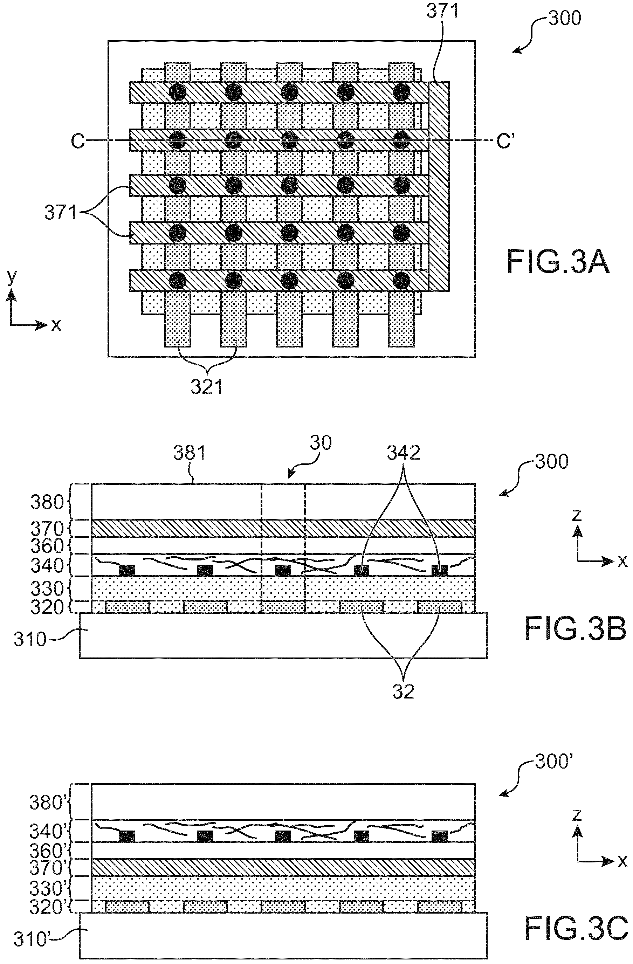

Les figures 3A et 3B illustrent de manière schématique un troisième mode de réalisation d'un capteur de motifs thermiques 300 selon l'invention. La figure 3A est une vue schématique de dessus, dans un plan parallèle au plan (xOy). La figure 3B est une vue en coupe dans un plan CC' parallèle au plan (xOz).

Dans ce troisième mode de réalisation, chaque pixel comporte un élément de chauffage, et ces éléments de chauffage sont mis à profit pour réaliser un adressage passif des pixels du capteur.

Les éléments de chauffage d'une même ligne de pixels sont reliés électriquement entre eux pour former une bande de chauffage 371. Chaque bande de chauffage 371 est configurée pour pouvoir être activée indépendamment des autres bandes de chauffage. En d'autres termes, les éléments de chauffage des pixels d'une même ligne de pixels sont aptes à chauffer les portions en matériau pyroélectrique des pixels de ladite ligne, indépendamment des éléments de chauffage des pixels des autres lignes. Les bandes de chauffage 371 présentent chacune une première extrémité, adaptée à être connectée à un potentiel électrique non nul, et une seconde extrémité, reliée de préférence à la masse. Ici, les secondes extrémités de toutes les bandes de chauffage sont reliées entre elles par l'intermédiaire d'une portion conductrice 373.

En outre, les électrodes de collecte de charges d'une même colonne de pixels sont reliées électriquement entre elles pour former une macro-électrode de collecte de charges 321. Chaque macro-électrode de collecte de charges 321 est formée par une bande électriquement conductrice, en contact avec les portions en matériau pyroélectrique des pixels de ladite colonne de pixels, et distincte des bandes électriquement conductrices formant les macro-électrodes de collecte de charges des autres colonnes de pixels.

Chaque macro-électrode de collecte de charges 321 permet de mesurer la somme des charges pyroélectriques, générées dans une même colonne de pixels. Si l'on n'active à chaque instant qu'une seule des bandes de chauffage 371, dans chaque colonne de pixels il n'y a qu'un seul pixel qui génère des charges pyroélectriques. Les charges pyroélectriques collectées par la macro-électrode de collecte de charges 321 se rapportent alors à cet unique pixel. On réalise ainsi un adressage passif des pixels du capteur.

Un tel capteur est décrit dans la demande de brevet français n° 16 57391, mentionnée en introduction.

Les termes « ligne » et « colonne » peuvent être échangés, ce qui correspondrait à une simple rotation à 90° du capteur.

Dans le mode de réalisation des figures 3A et 3B, le capteur de motifs thermiques 300 comporte, superposés dans cet ordre, au-dessus du substrat 310 :
- un étage 320 d'électrodes de collecte de charges, recevant les macro-électrodes de collecte de charge 321 ;
- un étage 330 comprenant un matériau pyroélectrique, identique à celui décrit en référence aux figures 1A et 1B ;
- un étage 340 de blindage électromagnétique, identique à celui décrit en référence aux figures 2A et 2B ;
- une couche 360 d'isolation électrique, telle que décrite en référence aux figures 1A et 1B ;
- un étage 370 dit étage de chauffage, recevant les bandes de chauffage 371; et
- une couche de protection 380, telle que décrite en référence aux figures 1A et 1B.

La surface de contact 381 du capteur est formée ici par une face supérieure de la couche de protection 380, du côté opposé au substrat 310.

L'étage 320 d'électrodes de collecte de charges est semblable à ce qui a été décrit en référence aux figures 1A et 1B, excepté que les électrodes de collecte de charges d'une même colonne de pixels sont formées ensemble d'un seul tenant. Elles sont réparties, selon l'axe (Ox), selon un pas de répartition inférieur ou égal à 150 µm, par exemple 90 µm, ou 80 µm, ou 50,8 µm.

Les bandes de chauffage 371 de l'étage de chauffage 370 sont réparties, selon l'axe (Oy), de préférence selon un pas de répartition identique au pas de répartition des macro-électrodes de collecte de charge 321. En tout état de cause, les bandes de chauffage de l'étage 370 sont réparties de préférence selon un pas inférieur ou égal à 150 µm, par exemple 90 µm, ou 80 µm, ou 50,8 µm. Les bandes de chauffage 371 comprennent de préférence un métal, par exemple de l'or ou de l'argent.

Chaque pixel 30 de la matrice de pixel est délimité latéralement par l'intersection entre une macro-électrode de collecte de charges 321, et une bande de chauffage 371. En d'autres termes, chaque pixel est délimité latéralement, dans des plans parallèles au plan du substrat, par les contours de l'intersection entre la projection orthogonale, dans un tel plan, d'une macro-électrode de collecte de charges 321, et la projection orthogonale, dans ce même plan, d'une bande de chauffage 371.

Chaque pixel 30 reçoit un unique plot 342 de l'étage 340 de blindage électromagnétique. Ce plot s'étend donc, dans l'étage 340 de blindage électromagnétique, en traversant une région d'intersection située dans un plan parallèle au plan du substrat, à l'intersection entre une projection orthogonale d'une macro-électrode 321 et une projection orthogonale d'une bande de chauffage 371.

La figure 3C illustre une variante 300', qui ne diffère du mode de réalisation des figures 3A et 3B qu'en ce que l'étage de blindage électromagnétique s'étend au-dessus de l'étage de chauffage.

En particulier, le capteur de motifs thermiques 300' comporte, superposées dans cet ordre au-dessus du substrat 310' :
- l'étage 320' d'électrodes de collecte de charges ;
- l'étage 330' comprenant un matériau pyroélectrique ;
- l'étage de chauffage 370' ;
- la couche 360' d'isolation électrique ;
- l'étage 340' de blindage électromagnétique ; et
- la couche de protection 380' telle que décrite ci-avant, distincte de l'étage 340' de blindage électromagnétique.

Selon cette variante, chaque ligne de chauffage de l'étage de chauffage 370' forme également une électrode de référence, commune à tous les pixels d'une ligne de pixels de la matrice de pixels. Ladite ligne de chauffage est apte à être connectée à une source de potentiel, elle-même adaptée à faire circuler un courant non nul dans la ligne de chauffage. Ce courant doit rester constant pendant la lecture des charges sur les électrodes de collecte de charge des pixels associés. Lorsque l'autre côté de la ligne de chauffage est connecté à la masse, ladite source de potentiel alterne avantageusement entre deux valeurs constantes : une valeur nulle où la ligne de chauffage ne chauffe pas, et une valeur non nulle où la ligne de chauffage fournit un chauffage par effet Joule.

En variante, l'étage de chauffage 370' comporte des couples de deux bandes parallèles entre elles, l'une dédiée au chauffage d'une ligne de pixels, et l'autre formant une électrode de référence commune pour les pixels de la même ligne de pixels.

Selon une autre variante, l'étage de blindage électromagnétique ne comporte pas de plots thermiquement conducteurs.

Selon des variantes non représentées du mode de réalisation des figures 3A et 3B, et du mode de réalisation de la figure 3C, les électrodes de collecte de charge d'une même colonne de pixels ne sont pas reliées entre elles, et l'adressage des pixels est de type actif et requiert des moyens de sélection dans chaque pixel, tels que des transistors.

Selon des variantes non représentées du mode de réalisation des figures 3A et 3B, et du mode de réalisation de la figure 3C, le matériau composite dans l'étage de blindage électromagnétique 340, ou 340', comporte en outre des particules de graphène.

L'invention n'est pas limitée aux exemples décrits ci-dessus, et de nombreuses variantes peuvent être mises en œuvre sans sortir du cadre de l'invention.

En particulier, l'invention s'applique à tout type de capteur thermique comportant une matrice de capacités pyroélectriques, avec ou sans éléments de chauffage, avec des éléments de chauffage distincts ou agencés en bandes de chauffage parallèles entre elles.

Dans les exemples ci-dessus, les structures allongées électriquement conductrices de la couche de blindage sont des nanofils métalliques. En complément ou en variante, il peut s'agir de nanotubes, en particulier des nanotubes de carbone.

Selon une variante de l'invention, lesdites structures allongées électriquement conductrices ne s'étendent pas dans un agglomérant tel qu'une matrice d'accueil polymérique, mais sont enchevêtrées entre elles et entourées d'un gaz tel que l'air formant le milieu environnant selon l'invention. Le milieu environnant étant alors électriquement non conducteur, les structures allongées électriquement conductrices s'étendent alors en un réseau percolé.

L'invention s'applique plus particulièrement à des capteurs dans lesquels une distance entre la surface de contact et le plan des faces supérieures des électrodes inférieures des capacités pyroélectriques, et inférieure ou égale au pas de pixel du capteur.

Le capteur de motifs thermiques selon l'invention peut comporter des éléments de chauffage qui ne sont pas reliés entre eux selon des lignes de chauffage.

L'invention n'est pas non plus limitée à une détection de type actif, et couvre également des capteurs adaptés à une détection de type passif, sans élément de chauffage pour chauffer les portions en matériau pyroélectrique des pixels du capteur.

Lorsque les dimensions du pixel le permettent, chaque pixel de la matrice de pixels peut comporter une pluralité de plots de l'étage de blindage électromagnétique.

Dans tous les modes de réalisation, l'étage de blindage électromagnétique s'étend entre l'étage comprenant un matériau pyroélectrique et la surface de contact du capteur. Pour autant, des étages intercalaires peuvent être situés entre l'étage de blindage électromagnétique et l'étage comprenant un matériau pyroélectrique, respectivement entre l'étage de blindage électromagnétique et la surface de contact. En particulier, une couche de protection s'étend avantageusement entre l'étage de blindage électromagnétique et la surface de contact, distincte de l'étage de blindage électromagnétique. En tout état de cause, une couche de protection forme une couche distincte de l'étage de blindage électromagnétique.

De préférence, l'étage de blindage électromagnétique est entièrement constitué de la couche de blindage en matériau composite tel que décrite ci-avant, ou d'un ensemble comportant des plots thermiquement conducteurs et ladite couche de blindage.

Le capteur peut inclure au moins un circuit de lecture, pour mesurer une quantité de charges collectée par une électrode de collecte de charges, et, le cas échéant, au moins un circuit de pilotage du chauffage, pour l'envoi de signaux électriques permettant de chauffer les pixels du capteur par l'intermédiaire des éléments de chauffage. Il peut comporter en outre un circuit électronique de traitement apte à construire une image globale d'un motif thermique, à partir de mesures réalisées au niveau de chacun des pixels du capteur.

Le motif thermique pouvant être imagé par le capteur peut être une empreinte papillaire, ou tout autre motif associé à un objet ayant une capacité thermique et une chaleur massique.

Un procédé de fabrication l'étage de blindage électromagnétique peut comporter les étapes suivantes :
- dépôt, directement sur l'étage comportant un matériau pyroélectrique ou sur une couche au-dessus de l'étage comportant un matériau pyroélectrique, d'une encre comportant, en suspension dans un solvant, des nanofils métalliques, des particules du matériau de l'agglomérant, et le cas échéant des particules de graphène ; puis
- évacuation du solvant, pour former la couche de blindage en matériau composite.

Dans ce cas, la composition du matériau composite, donnée ci-avant à l'aide de pourcentages en poids, correspond à la composition de l'encre après évacuation du solvant.

En variante, l'encre comporte uniquement les nanofils métalliques, en suspension dans un solvant. Après évacuation du solvant, il ne reste que les nanofils métalliques.

Le cas échéant, des espaces entre les nanofils métalliques sont remplis ultérieurement par le matériau d'une couche déposée ensuite au-dessus des nanofils métalliques, par exemple le matériau d'une couche d'isolation électrique. En variante, le matériau d'une couche déposée ensuite au-dessus des nanofils métalliques ne parvient pas à s'insérer entre les nanofils, de sorte que les nanofils restent entourés d'un gaz tel que l'air.

Le solvant est choisi pour ne pas dissoudre la couche sur laquelle l'encre est déposée, par exemple pour ne pas dissoudre une couche comportant un matériau pyroélectrique.

Il s'agit par exemple d'un solvant qui ne dissout pas le PVDF et qui dissout le polystyrène (agglomérant), tel que le butyl-acétate, le propyl-acétate, ou le PGMEA (Propylène glycol méthyl éther acétate).

En variante, il peut s'agir d'un solvant qui ne dissout pas le PVDF et qui dissout le PMMA (agglomérant), tel que le 2-méthoxyéthanol, le butyl-acétate, l'éthoxyéthanol, l'éthyl acétate, le propyl acétate, ou le PGMEA.

En variante, il peut s'agir d'un solvant qui ne dissout pas le PVDF et qui dissout le PEDOT :PSS ou la PAni (agglomérant), tel que l'eau.

L'encre est déposée de manière à s'étendre d'un seul tenant et sans ouverture au-dessus du substrat.

L'encre est déposée par une technique d'impression telle que la sérigraphie, l'impression par jet d'encre, l'héliogravure, la flexogravure, l'offset gravure, etc.

Le cas échéant, on forme des plots en matériau thermiquement conducteur au-dessus de l'étage comportant un matériau pyroélectrique, avant ladite étape de dépôt de l'encre. Les plots peuvent également être réalisés par dépôt d'une encre.

En variante, l'encre comporte des nanotubes, notamment des nanotubes de carbone, en complément ou à la place des nanofils métalliques.

## Revendications

1. Capteur de motifs thermiques (100 ; 100' ; 200 ; 200' ; 300 ; 300') comportant une matrice de pixels, chaque pixel comportant au moins une capacité pyroélectrique, formée par une portion en matériau pyroélectrique disposée entre une électrode de collecte de charges (121) et une électrode de référence, et la matrice de pixels comportant, superposés au-dessus d'un substrat (110 ; 210 ; 310 ; 310') :
- un étage (120 ; 320 ; 320') d'électrodes de collecte de charges, comportant les électrodes de collecte de charge de chacun des pixels ; et
- un étage (130; 330 ; 330') comprenant un matériau pyroélectrique, comportant les portions en matériau pyroélectrique de chacun des pixels ;
la matrice de pixels comportant en outre un étage de blindage électromagnétique (140 ; 240 ; 340 ; 340'), électriquement conducteur, situé entre l'étage (130 ; 330 ; 330') comprenant un matériau pyroélectrique et une surface de contact (181 ; 381) pour y appliquer un objet à imager;
**caractérisé en ce que** l'étage de blindage électromagnétique (140 ; 240 ; 340 ; 340') comprend une couche de blindage (141; 141' ; 241) qui comporte des nanofils et/ou nanotubes (1411; 2411) baignant dans un milieu nommé milieu environnant, lesdits nanofils et/ou nanotubes étant constitués chacun d'un matériau présentant une conductivité thermique supérieure à celle dudit milieu environnant , et **en ce qu'**un rapport entre un pas de répartition (P) des pixels de la matrice de pixels et une épaisseur (H) de la couche de blindage (141 ; 141' ; 241) est supérieur ou égal à 20.

2. Capteur de motifs thermiques (100 ; 100' ; 200; 200'; 300; 300') selon la revendication 1, **caractérisé en ce que** le matériau des nanofils et/ou nanotubes (1411; 2411) présente une conductivité thermique au moins dix fois supérieure à celle dudit milieu environnant (1412 ; 2412).

3. Capteur de motifs thermiques (100 ; 100' ; 200; 200'; 300; 300') selon la revendication 1 ou 2, **caractérisé en ce que** la couche de blindage (141; 141' ; 241) est constituée d'un matériau composite, le matériau composite comportant lesdits nanofils et/ou nanotubes (1411; 2411) intégrés dans un agglomérant (1412 ; 2412) qui forme ledit milieu environnant.

4. Capteur de motifs thermiques (100 ; 100' ; 200; 200'; 300; 300') selon la revendication 3, **caractérisé en ce que** le matériau composite comporte entre 20% et 40% en poids de nanofils et/ou nanotubes (1411 ; 2411).

5. Capteur de motifs thermiques (100 ; 100' ; 200; 200'; 300; 300') selon la revendication 3 ou 4, **caractérisé en ce que** l'agglomérant (1412 ; 2412) est une matrice polymère électriquement isolante, et **en ce que** les nanofils et/ou nanotubes (1411; 2411) forment ensemble un réseau percolé.

6. Capteur de motifs thermiques (100 ; 100' ; 200; 200'; 300; 300') selon la revendication 3 ou 4, **caractérisé en ce que** l'agglomérant (1412 ; 2412) est une matrice polymère électriquement conductrice, et **en ce que** les nanofils et/ou nanotubes (1411; 2411) forment ensemble un réseau non percolé.

7. Capteur de motifs thermiques (100 ; 100' ; 200 ; 200' ; 300 ; 300') selon l'une quelconque des revendications 1 à 6, **caractérisé en ce que** les nanofils et/ou nanotubes (1411; 2411) présentent chacun une longueur strictement inférieure au pas de pixels (P) de la matrice de pixels.

8. Capteur de motifs thermiques (100' ; 200') selon l'une quelconque des revendications 3 à 7, **caractérisé en ce que** le matériau composite comporte en outre des particules de graphène (1413 ; 2413).

9. Capteur de motifs thermiques (100' ; 200') selon la revendication 8, **caractérisé en ce que** le matériau composite comporte en outre entre 10% et 30% en poids de particules de graphène (1413 ; 2413).

10. Capteur de motifs thermiques (200 ; 200' ; 300 ; 300') selon l'une quelconque des revendications 1 à 9, **caractérisé en ce que** l'étage de blindage électromagnétique (240 ; 340 ; 340') comprend en outre des plots (242; 342) comportant du graphène ou du métal.

11. Capteur de motifs thermiques (300; 300') selon l'une quelconque des revendications 1 à 10, **caractérisé en ce que** :
- chaque pixel comporte en outre un élément de chauffage, apte à chauffer par effet Joule la portion en matériau pyroélectrique dudit pixel ; et
- un étage de chauffage (370 ; 370'), comportant les éléments de chauffage de chacun des pixels, s'étend dans la matrice de pixels entre l'étage comprenant un matériau pyroélectrique (330 ; 330') et la surface de contact (381).

12. Capteur de motifs thermiques (300 ; 300') selon la revendication 11, **caractérisé en ce que** :
- les éléments de chauffage d'une même ligne de pixels sont formés ensemble d'un seul tenant, en une même bande de chauffage (371) ;
- les électrodes de collecte de charges d'une même colonne de pixels sont formées ensemble d'un seul tenant, en une même macro-électrode de collecte de charges (321) ; et
- l'étage de blindage électromagnétique (340 ; 340') comprend en outre une matrice de plots (342) comportant du graphène ou du métal, chaque plot (342) s'étendant à travers une région d'intersection entre une projection d'une bande de chauffage (371) et une projection d'une macro-électrode de collecte de charges (321), lesdites projections étant des projections orthogonales dans un plan parallèle à une face supérieure ou inférieure du substrat (310 ; 310').

13. Capteur de motifs thermiques (300) selon la revendication 11 ou 12, **caractérisé en ce que** la matrice de pixels comporte, superposés :
- l'étage d'électrodes de collecte de charges (320) ;
- l'étage comprenant un matériau pyroélectrique (330) ;
- l'étage de blindage électromagnétique (340), formant en outre les électrodes de référence des pixels de la matrice de pixels ;
- une couche d'isolation électrique (360) ; et
- l'étage de chauffage (370).

14. Capteur de motifs thermiques (300') selon la revendication 11 ou 12, **caractérisé en ce que** la matrice de pixels comporte, superposés :
- l'étage d'électrodes de collecte de charges (320') ;
- l'étage comprenant un matériau pyroélectrique (330') ;
- l'étage de chauffage (370'), les éléments de chauffage formant en outre les électrodes de référence des pixels de la matrice de pixels ;
- une couche d'isolation électrique (360') ; et
- l'étage de blindage électromagnétique (340').

15. Procédé de fabrication de la matrice de pixels d'un capteur de motifs thermiques (100 ; 100' ; 200; 200'; 300; 300') selon l'une quelconque des revendications 1 à 14, **caractérisé en ce qu'**une étape de réalisation de l'étage de blindage électromagnétique (140 ; 240 ; 340 ; 340') comporte un dépôt d'une encre comprenant, en suspension dans un solvant, lesdits nanofils et/ou nanotubes (1411 ; 2411).

## Patentansprüche

1. Sensor für thermische Muster (100; 100'; 200; 200'; 300; 300'), eine Pixelmatrix beinhaltend, wobei jedes Pixel mindestens eine pyroelektrische Kapazität beinhaltet, die durch einen Bereich aus pyroelektrischem Material gebildet wird, der zwischen einer Ladungsspeicherelektrode (121) und einer Referenzelektrode angeordnet ist, und die Pixelmatrix beinhaltet, über einem Substrat (110; 210; 310; 310') übereinanderliegend:
- eine Lage (120; 320; 320') von Ladungsspeicherelektroden, die Speicherelektroden der Ladung jedes der Pixel beinhaltend; und
- eine Lage (130; 330; 330'), ein pyroelektrisches Material umfassend, die die Bereiche aus pyroelektrischem Material jedes der Pixel beinhaltet;
wobei die Pixelmatrix ferner eine elektromagnetische elektrisch leitende Abschirmlage (140; 240; 340; 340') beinhaltet, die zwischen der Lage (130; 330; 330'), die ein pyroelektrisches Material umfasst, und einer Kontaktfläche (181; 381) liegt, um darauf ein abzubildendes Objekt zu applizieren;
**dadurch gekennzeichnet, dass** die elektromagnetische Abschirmlage (140; 240; 340; 340') eine Abschirmschicht (141; 141'; 241) umfasst, die Nanodrähte und/oder Nanoröhren (1411; 2411) beinhaltet, die in ein Medium getaucht sind, das als Umgebung bezeichnet wird, wobei die Nanodrähte und/oder Nanoröhren jeweils aus einem Material bestehen, das eine höhere Wärmeleitfähigkeit als die der Umgebung aufweist, und dass ein Verhältnis zwischen einem Verteilungsschritt (P) der Pixel der Pixelmatrix und einer Dicke (H) der Abschirmschicht (141; 141'; 241) größer oder gleich 20 ist.

2. Sensor für thermische Muster (100; 100'; 200; 200'; 300; 300') nach Anspruch 1, **dadurch gekennzeichnet, dass** das Material der Nanodrähte und/oder Nanoröhren (1411; 2411) eine mindestens zehnmal höhere Wärmeleitfähigkeit aufweist als die Umgebung (1412; 2412).

3. Sensor für thermische Muster (100; 100'; 200; 200'; 300; 300') nach Anspruch 1 oder 2, **dadurch gekennzeichnet, dass** die Abschirmschicht (141; 141'; 241) aus einem Verbundwerkstoff besteht, wobei der Verbundwerkstoff die Nanodrähte und/oder Nanoröhren (1411; 2411) beinhaltet, die in einem Agglomerat (1412; 2412) eingebettet sind, das die Umgebung bildet.

4. Sensor für thermische Muster (100; 100'; 200; 200'; 300; 300') nach Anspruch 3, **dadurch gekennzeichnet, dass** der Verbundwerkstoff zwischen 20 und 40 Gew.-% Nanodrähte und/oder Nanoröhren (1411; 2411) beinhaltet.

5. Sensor für thermische Muster (100; 100'; 200; 200'; 300; 300') nach Anspruch 3 oder 4, **dadurch gekennzeichnet, dass** das Agglomerat (1412; 2412) eine elektrisch isolierende Polymermatrix ist und dass die Nanodrähte und/oder Nanoröhren (1411; 2411) zusammen ein perkolatives Netz bilden.

6. Sensor für thermische Muster (100; 100'; 200; 200'; 300; 300') nach Anspruch 3 oder 4, **dadurch gekennzeichnet, dass** das Agglomerat (1412; 2412) eine elektrisch leitfähige Polymermatrix ist und dass die Nanodrähte und/oder Nanoröhren (1411; 2411) zusammen ein nicht-perkolatives Netz bilden.

7. Sensor für thermische Muster (100; 100'; 200; 200'; 300; 300') nach einem der Ansprüche 1 bis 6, **dadurch gekennzeichnet, dass** die Nanodrähte und/oder Nanoröhren (1411; 2411) jeweils eine Länge aufweisen, die unbedingt kleiner ist als der Pixelschritt (P) der Pixelmatrix.

8. Sensor für thermische Muster (100'; 200') nach einem der Ansprüche 3 bis 7, **dadurch gekennzeichnet, dass** der Verbundwerkstoff ferner Graphenpartikel (1413; 2413) beinhaltet.

9. Sensor für thermische Muster (100'; 200') nach Anspruch 8, **dadurch gekennzeichnet, dass** der Verbundwerkstoff ferner zwischen 10 und 30 Gew.-% Graphenpartikel (1413; 2413) beinhaltet.

10. Sensor für thermische Muster (200; 200'; 300; 300') nach einem der Ansprüche 1 bis 9, **dadurch gekennzeichnet, dass** die elektromagnetische Abschirmlage (240; 340; 340') ferner Kontakte (242; 342) umfasst, die Graphen oder Metall beinhalten.

11. Sensor für thermische Muster (300; 300') nach einem der Ansprüche 1 bis 10, **dadurch gekennzeichnet, dass**:
- jedes Pixel ferner ein Heizelement beinhaltet, geeignet, um den Bereich aus pyroelektrischem Material des Pixels durch Joule-Effekt zu erwärmen, und
- eine Heizlage (370; 370'), die Heizelemente jedes Pixels beinhaltend, sich in der Pixelmatrix zwischen der Lage, die ein pyroelektrisches Material (330; 330') umfasst, und der Kontaktfläche (381) erstreckt.

12. Sensor für thermische Muster (300; 300') nach Anspruch 11, **dadurch gekennzeichnet, dass**:
- die Heizelemente der gleichen Pixellinie zusammen einstückig in einem gleichen Heizband (371) gebildet werden;
- die Ladungsspeicherelektroden einer gleichen Pixelspalte zusammen einstückig in einer gleichen Makro-Ladungsspeicherelektrode (321) gebildet werden; und
- die elektromagnetische Abschirmlage (340; 340') ferner eine Kontaktmatrix (342) umfasst, die Graphen oder Metall beinhaltet, wobei sich jeder Kontakt (342) durch einen Schnittmengenbereich zwischen einer Projektion eines Heizbandes (371) und einer Projektion einer Makro-Ladungsspeicherelektrode (321) erstreckt, wobei die Projektionen orthogonale Projektionen in einer Ebene sind, die parallel zu einer oberen oder unteren Fläche des Substrats (310; 310') verläuft.

13. Sensor für thermische Muster (300) nach Anspruch 11 oder 12, **dadurch gekennzeichnet, dass** die Pixelmatrix übereinanderliegend beinhaltet:
- die Lage der Ladungsspeicherelektroden (320);
- die Lage, die ein pyroelektrisches Material (330) umfasst;
- die elektromagnetische Abschirmlage (340), die ferner die Referenzelektroden der Pixel der Pixelmatrix bildet;
- eine elektrische Isolierschicht (360); und
- die Heizlage (370).

14. Sensorfürthermische Muster (300') nach Anspruch 11 oder 12, **dadurch gekennzeichnet, dass** die Pixelmatrix übereinanderliegend beinhaltet:
- die Lage der Ladungsspeicherelektroden (320');
- die Lage, die ein pyroelektrisches Material (330') umfasst;
- die Heizlage (370'), wobei die Heizelemente ferner die Referenzelektroden der Pixel der Pixelmatrix bilden;
- eine elektrische Isolierschicht (360'); und
- die elektromagnetische Abschirmlage (340').

15. Verfahren zur Herstellung der Pixelmatrix eines Sensor für thermische Muster (100; 100'; 200; 200'; 300; 300') nach einem der Ansprüche 1 bis 14, **dadurch gekennzeichnet, dass** ein Ausführungsschritt der elektromagnetischen Abschirmlage (140; 240; 340; 340') ein Aufbringen einer Farbe beinhaltet, in Suspension in einem Lösungsmittel die Nanodrähte und/oder Nanoröhren (1411; 2411) umfassend.

## Claims

1. Heat pattern sensor (100; 100'; 200; 200'; 300; 300') comprising a matrix of pixels, each pixel comprising at least one pyroelectric capacitance which is formed by a pyroelectric material portion arranged between a charge collection electrode (121) and a reference electrode, and the matrix of pixels comprising, superimposed above a substrate (110; 210; 310; 310'):
a stage (120; 320; 320') of charge collection electrodes, comprising the charge collection electrodes of each of the pixels; and
a stage (130; 330; 330') including a pyroelectric material, comprising the pyroelectric material portions of each of the pixels;
the matrix of pixels further comprising an electromagnetic shielding stage (140; 240; 340; 340'), electrically conducting, situated between the stage (130; 330; 330') including a pyroelectric material and a contact surface (181; 381) to apply thereto an object to image;
**characterized in that** the electromagnetic shielding stage (140; 240; 340; 340') includes a shielding layer (141; 141'; 241) which comprises nanowires and/or nanotubes (1411; 2411) lying in a surrounding medium, said nanowires and/or nanotubes each being constituted of a material having a thermal conductivity greater than that of said surrounding medium, and **in that** a ratio between a distribution pitch (P) of the pixels of the matrix of pixels and a thickness (H) of the shielding layer (141; 141'; 241) is greater than or equal to 20.

2. Heat pattern sensor (100; 100'; 200; 200'; 300; 300') according to claim 1, **characterized in that** the material of the nanowires and/or nanotubes (1411; 2411) has a thermal conductivity at least ten times greater than that of said surrounding medium (1412; 2412).

3. Heat pattern sensor (100; 100'; 200; 200'; 300; 300') according to claim 1 or 2, **characterized in that** the shielding layer (141; 141'; 241) is constituted of a composite material, the composite material comprising said nanowires and/or nanotubes (1411; 2411) integrated in a binder (1412; 2412) which forms said surrounding medium.

4. Heat pattern sensor (100; 100'; 200; 200'; 300; 300') according to claim 3, **characterized in that** the composite material comprises between 20% and 40% by weight of nanowires and/or nanotubes (1411; 2411).

5. Heat pattern sensor (100; 100'; 200; 200'; 300; 300') according to claim 3 or 4, **characterized in that** the binder (1412; 2412) is an electrically insulating polymer matrix, and **in that** the nanowires and/or nanotubes (1411; 2411) together form a percolated network.

6. Heat pattern sensor (100; 100'; 200; 200'; 300; 300') according to claim 3 or 4, **characterized in that** the binder (1412; 2412) is an electrically conducting polymer matrix, and **in that** the nanowires and/or nanotubes (1411; 2411) together form a non-percolated network.

7. Heat pattern sensor (100; 100'; 200; 200'; 300; 300') according to any one of claims 1 to 6, **characterized in that** the nanowires and/or nanotubes (1411; 2411) each have a length strictly less than the pixel pitch (P) of the matrix of pixels.

8. Heat pattern sensor (100'; 200') according to any one of claims 3 to 7, **characterized in that** the composite material further comprises graphene particles (1413; 2413).

9. Heat pattern sensor (100'; 200') according to claim 8, **characterized in that** the composite material further comprises between 10% and 30% by weight of graphene particles (1413; 2413).

10. Heat pattern sensor (200; 200'; 300; 300') according to any one of claims 1 to 9, **characterized in that** the electromagnetic shielding stage (240; 340; 340') further includes pads (242; 342) comprising graphene or metal.

11. Heat pattern sensor (300; 300') according to any one of claims 1 to 10, **characterized in that**:
- each pixel further comprises a heating element, able to heat by Joule effect the pyroelectric material portion of said pixel; and
- a heating stage (370; 370'), comprising the heating elements of each of the pixels, extends into the matrix of pixels between the stage including the pyroelectric material (330; 330') and the contact surface (381).

12. Heat pattern sensor (300; 300') according to claim 11, **characterized in that**:
- the heating elements of a same line of pixels are formed together in one piece, in a same heating strip (371);
- the charge collection electrodes of a same column of pixels are formed together in one piece, in a same charge collection macro-electrode (321); and
- the electromagnetic shielding stage (340; 340') further includes a matrix of pads (342) comprising graphene or metal, each pad (342) extending through an intersection region between a projection of a heating strip (371) and a projection of a charge collection macro-electrode (321), said projections being orthogonal projections in a plane parallel to an upper or lowerface of the substrate (310; 310').

13. Heat pattern sensor (300) according to claim 11 or 12, **characterized in that** the matrix of pixels comprises, superimposed:
- the stage of charge collection electrodes (320);
- the stage including the pyroelectric material (330);
- the electromagnetic shielding stage (340), further forming the reference electrodes of the pixels of the matrix of pixels;
- an electrical insulation layer (360); and
- the heating stage (370).

14. Heat pattern sensor (300') according to claim 11 or 12, **characterized in that** the matrix of pixels comprises, superimposed:
- the stage of charge collection electrodes (320');
- the stage including a pyroelectric material (330');
- the heating stage (370'), the heating elements further forming the reference electrodes of the pixels of the matrix of pixels;
- an electrical insulation layer (360'); and
- the electromagnetic shielding stage (340').

15. Method for manufacturing the matrix of pixels of the heat pattern sensor (100; 100'; 200; 200'; 300; 300') according to any one of claims 1 to 14, **characterized in that** a step of producing the electromagnetic shielding stage (140; 240; 340; 340') comprises deposition of an ink including, in suspension in a solvent, said nanowires and/or nanotubes (1411; 2411).
